# EUROPEAN PATENT APPLICATION

(11) **EP 3 020 633 A1**
(43) Date of publication of application: **18.05.2016**
(21) Application number: 15466013.8
(22) Date of filing: 11.11.2015
(51) Int. Cl.: B64C 39/02, G05D 1/08

(54) **FLIGHT CONTROL UNIT FOR TIED UNMANNED AERIAL VEHICLE MODELS**

(30) Priority: 12.11.2014 CZ 20140780
(71) Applicant: Vyzkumny utav melioraci a ochrany pudy, v.v.l., 156 27 Praha 5 - Zbraslav (CZ); ADCIS s.r.o., 530 09 Pardubice (CZ)
(72) Inventor: Kulhavý, Zbynek, 53002 Pardubice (CZ); Krejzek, Pavel, 53002 Ostresany (CZ); Kulhavý, Martin, 53002 Pardubice (CZ)
(74) Representative: Jirkalova, Hana

(57) **Abstract**

The solution proposed refers to a flight control unit (6) for tied models (1) (copters; UAV - Unmanned Aerial Vehicle) that provides for direct flight control using mechanical or electronic guiding link (2) between the guiding point (3) and the model (1). The mechanical execution of the guiding point (3) and the guiding link (2) can consist of a whipcord, wire, electrical cable etc.; the electronic type of guiding link (2) is then representing the line with an acoustic or electromagnetic signal, a light beam etc. The unit may be completed with data communication to specify the position coordinates of the guiding point (3) and the model (1) in more detail. The solution proposed provides for fully automated navigation of the model (1) to a required position in reference of the guiding point (3), without imposing higher level of skills on the pilot (4) or the necessity to know the movement path trajectory in advance as it is the case in wireless remote control of the model (1), or its flight programming.

## Description

### Technical Field

The invention relates to a device used to control the flight of unmanned drones (copters; UAV - Unmanned Aerial Vehicle) that provides for direct flight control (guidance of the model) using mechanical or electronic guiding connection (guiding link) between the guiding point (pilot) and the model.

### Current State of the Technology

Up to now unmanned aircraft are operated either as autonomous, i.e. without the possibility of pilot's intervention into the flight control, or controlled directly by the pilot using radio signal transmitter and receiver (RC), or by tying up the model via a guiding cable. In drones it is the systems of automatic control (by programming the flight path using a set of GPS coordinates, the so called waypoints), or piloted straight on via the RC transmitter, or, where appropriate, by a combination of the a.m. control modes, which show its advantage. Guiding the UAV using a set of cables is being used in tied-up aircraft models, in which the aircraft is copying a trajectory around the pilot's position and the pilot is guiding the flight by operating a handle linked with cables to control the height control wings of the aircraft. The aircraft move around using the lift force acting on the wings while keeping the flight speed at some minimum value. This is why they need adequate space in the environment for their operation. In this respect the copters that move around with the use of rotating vertical propellers (generally by two, four, six or eight), are not demanding in terms of space, but anchoring them to a guiding cable does not optimally resolve their flight control needs. The term of rotor, in this case, denotes the airfoil of the drone. Mechanical intervention into the stabilized position of the drone (towage, anchorage at height, etc.) manifests itself in the reduction of the efficiency of the power source (generally an accumulator) necessary to overcome the resistances of the rotors and the inaccuracies of the positioning of the drone at the altitude (caused by winds, parameters of the control unit etc.). There are no other alternative ways used to control the drones.

The need to stabilize the drone at a specific height (in the order of units to up to dozens of meters) and at a specific geographical position, or to move it along a trajectory copying the movements of the pilot, is most frequently required in the practice in the ground reconnaissance whilst monitoring ground objects using a camera, and in online video transmissions or making video records. One application example is searching for objects across a broken terrain, in vegetation or staking out specific objects detectable from the height such as the symptoms of underground drainage systems across an overgrowth.

The latter of the activities mentioned has become an incentive for the innovation proposed. The objective and principles of drainage channel identification are described in the CZ 304229 patent entitled "Zp 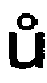 sob zji 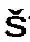 t 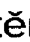 ní drená 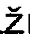 ního systému pro jeho vyty 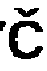 ení v terénu" (*Method of detection of a drainage system for the purpose of its staking out in the landscape),* or, more recently, in the "Vodní hospodářství" (Water Management) magazine No. VH 03/2014 entitled "Identifikace drenàžních systemů pomocí dálkového pruzkumu Zem 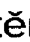 " (*The identification of drainage systems using Earth observation techniques).*

Summary of the above activities can be ensured by manual remote flight control of the drone equipped with a camera, using the RC set or by way of programming the drone controller to follow a specific flight path (waypoints). Work activities related to manual control require a synergy of at least two persons whereas the automatic piloting is significantly restricted by the current Czech legislation (Law No. 439/2006 Coll. on civil aviation, the L2 regulation - Appendix X of May 30, 2013), which, inter alia, increases the investment and operational costs. At the same time the pilot must have the corresponding engineering or manual skills, and the operator must meet strict criteria (conditions of use, registration of the unmanned machine, examination of the pilot's knowledge, engineering controls to provide for continuous supervision of the drone and possibilities of enforced flight termination, restricted use of waypoints, delimitation of the air space, etc.). There are no solutions available as yet which would be capable to eliminate partially or entirely the above restrictions.

### Subject Matter of the Invention

The aforementioned drawbacks are eliminated by a flight control unit for tied models of drones, consisting primarily from sensors to control the flight altitude and direction, guide connections and electronic module attachable to the control unit of the drone, in line with the invention, the gist of which consists in terminating the guiding connection of the guiding point to the model with an altitude control sensor and a pair of flight direction control sensors, with the possibility of interconnection between the flight controller and the drone control unit.

According to the invention the control unit is characterized in that the structural arrangement the flight control and the drone control units are merged in one single engineering unit.

In addition, the flight control unit as per the invention is characterized by the structural arrangement of the power supply pack which is split up into two parts - a sub power pack (auxiliary power supply unit) being a part of the guiding link, and a main power pack (main power supply unit) mounted on the model, in which case the main power pack on the model is recharged via the guiding connection (guiding link).

The flight control unit as per the invention is also characterized by a specific structural arrangement of the power supply pack, which as a part of the guiding point provides simultaneously power to the model via the guiding connection.

The flight control unit as per the invention is also characterized in that it includes an electronic magnetometer.

The flight control unit as per the invention is a supplement to the standard control unit of the drone (copter). It is based on a direct guiding connection of the guiding point, e.g. a pilot, which does not have to be necessarily a natural person but generally any type of mobile ground service such as a go-cart, and the drone, which can consist of a mechanical link, e.g. a guiding cable, which provides for both the take-off of the drone e.g. by loosening and unreeling the cable from a reel, and also its landing by tightening and winding-up the cable on the reel, and furthermore, fixing the drone at an altitude and position chosen, e.g. in reference to the pilot's position, or copying its movements. The electronic version of connection between the pilot and the drone is an option to the above mechanical variant, in which the connection is established by a whipcord, wire, electric cable, etc. The electronic mode of connection takes place by way of acoustic or electromagnetic signal, light beam etc., however without a direct intervention of the pilot into the drone control system, which is the main difference compared to the use of conventional RC set.

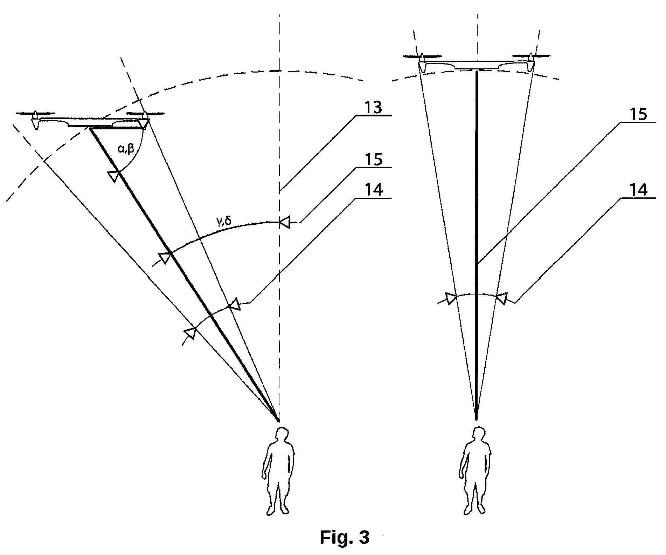

Mechanical design solves several application of needs:
- first of all, the collision consisting in the legislative restriction of drone usage is eliminated, since now the freely flying unmanned system becomes a tied-up system under continuous and direct surveillance of the pilot, and in which the drone operating staff is unequivocally defined by the guiding wire (elimination of operator's anonymity) outlining the flight radius and the upper height of the air space (see Fig. 3);
- tying up the model fully delivers on the legislation requirement to have the possibility of interference into the flight course and termination of the flight if circumstances leading to threat occur;
- minimization of pilot skill requirements imposed otherwise on commonly used remote RC flight control; hereby the flight operation has been reduced to the handling of the guiding point, only, e.g. by the guiding wire reel, and adherence to operational and safety measures, wherein the pilot's safety in case of drone failure is dealt with e.g. by setting a deviation of the guiding connection from vertical - see the γ and δ angles in Fig. 3, on the left-hand side. Consequently, in case of a failure and the subsequent accident the drone falls to the ground farther away from the pilot's emplacement;
- no need using wireless equipment, with the exception of a videosignal transmission, unless such is taking place through a two-or multiple core cable as a part of the guiding wire, which means that its usage is of advantage at all the places where wireless operation is either restricted or disallowed; simultaneously, the risk of electromagnetic interferences affecting the flight control signal is excluded;
- extension of the flight period of the drone if main or auxiliary power supply via a conductor is chosen, when the conductor acts as a guiding wire;

The electronic version stems from the mechanical one, but modifies the usage of guiding connection by appropriate electronic principles based on the needs and conditions of such a connection.

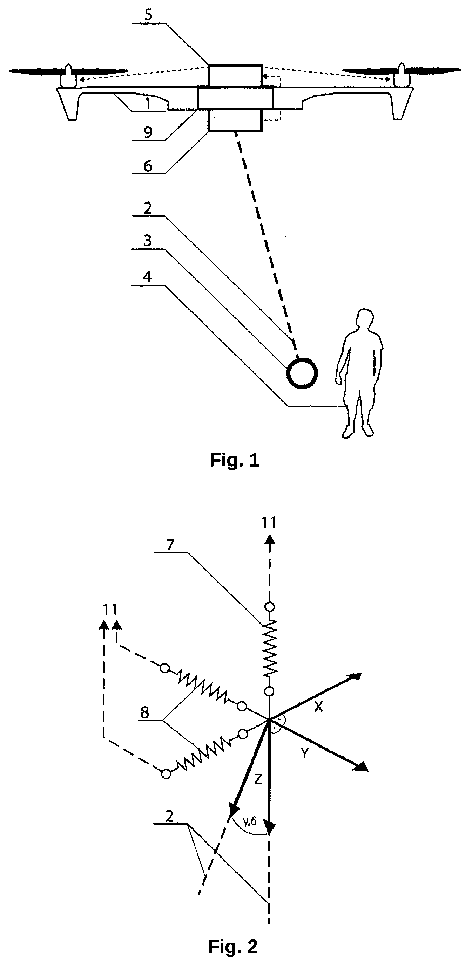

The flight control unit devised as per this invention uses arbitrary configuration of unmanned drone, and does include specific mechanical parts, such as the drone frame with undercarriage and booms for the respective rotors, the drone control electronic unit ensuring the coordination between the rotors, and the power supply unit - see Fig. 1. In the configuration devised the RC receiver for the wireless control unit is not required and is replaced with the flight control unit which, in some cases, may perform the duties of standardized control electronics of the drone. The electronics of the drone control unit, devised as per the invention, is used to stabilize the drone during its flight and makes it possible to carry out basic flight operations such as take-off, descent and movement of the drone in any direction, or spinning the drone along its vertical axis. Directional stabilization of the drone using a compass (three-axis magnetometer) is not a prerequisite for flying the drone, but makes it possible to keep the required drone orientation in some of its applications, e.g. in reference to the object observed.

The flight control unit devised as per this invention serves to keeping the drone in a required position vis-a-vis the pilot (in both the direction and the altitude). For better understanding, a copyright principle of mechanical connection between the pilot and the drone, using a wire, is described hereunder. However, the other mechanical arrangements of the guiding connection are operating in similar way, which applies also to the electronic design variants of guiding connection between the pilot and the drone.

The flight control unit as per this invention contains an altitude control sensor, sensors to control the flight direction and, optionally, a sensor for directional orientation of the drone unless a manometer is used as a part of the drone control unit. The altitude control sensor monitors the stretching force of the guiding wire, and in normal configuration the drone control kit with RC transmitter simulates one transmission channel (the so called "gas"). If the force (tension) in the wire increases, e.g. by the operator attracting the wire to itself, the flight control unit reduces evenly the output power or motors, and vice versa, decreasing the tension by loosening the wire or unreeling the wire from the reel causes the flight control unit as per the invention to evenly increase the output power of the motors. In such a way the drone takeoff, stabilization at a required altitude, which corresponds to a balanced wire tightening condition or the drone touch-down are ensured. Should it happen that the weight of the guiding wire will significantly affect the wire tension measured by the altitude control sensor, which depends on the length of the unreeled guiding wire, i.e. the altitude of drone flying above the pilot, which may arise if a heavier cable is used for example for simultaneous drone guiding and power supply, contrary to an arrangement with a light-weight fishing line, it will become necessary to take these forces into account and to correct them depending on the length of the unreeled guiding wire or the drone flight level and the weight of the guiding wire deduced thereof.

The flight direction control sensors are used to monitor the pilot's position as against the flying drone, preferably stabilized in horizontal position. The activity of rotors, depending on the guiding wire vector (angle and direction) compared to the drone's flight plane, is controlled in a way to stabilize the drone at required position above the pilot (see Fig. 3).

In doing so the flight control unit simulates the manual control of drone movements by the pilot's intervention, who otherwise would handle the joystick on the RC transmitter. In this function the flight control unit simulates two transmission channels (to the left/to the right - forwards/backwards). Apart from maintaining vertical position of the guiding connection (see the right side of Fig. 3), which is done by setting up the flight control unit parameters, also specific angular (vectorial) deviations of the drone out of the pilot's position may be chosen (see the left side of Fig. 3), which may provide to the increase of the pilot's safety mentioned above in case of drone failure and crash, but may also provide for access of the drone above a monitored obstruction such as a building, inaccessible ground etc. Optionally, the flight control unit as per the invention is equipped with electronic magnetometer, which allows for spinning round the drone in horizontal plane by using 4th control channel of the unit. This function will be used in particular for automatic stabilization of a steer angle of a camera, or accurate access control to areas above an obstruction. Proper functioning of all the above mentioned flight control systems is conditional upon maintaining the drone in stabilized position, e.g. in horizontal plane, which eliminates the risk of crash by controlling the drone tilt, in which case all the geometrical conditions for flight control are met (see Fig. 3).

In case of mechanical connection the drone is held in place using a guiding cable. The cable can be of metallic and non-metallic type. Alternative to this is the use of electric cable which may simultaneously be used as the main or auxiliary source of power to supply electronic components, in particular electric motors to drive the drone. There are at least two aspects to be considered when choosing the type of electric cable: the carrying capacity of the drone and the weight of the reeled out section of the electric cable. The actual carrying capacity of drone is the result of the thrust of rotor unit and the power consumption of motors which has a relation to the intensity of electric current transferred by the conductors and the limited cross-section of conductors. All these quantities have to be optimized in reference to the required maximum flying height of the drone and the longest operation period (in order to eliminate overheating of both the conductors and the motors).

The advantage of the mechanical design of the guiding connection is that it may consist of a whipcord, wire, electric cable etc.; its electronic design is then represented by acoustic or electromagnetic signal, light beam etc. The assembly may be completed with data communication facilities to determine the coordinates of the guiding point (pilot) and the drone in more detail. The flight control unit as per this invention makes it possible to fully automatically navigate the model into required position in relation to the guiding point (pilot, operator of the model), without imposing higher level of skills on the pilot or knowing the movement path trajectory in advance as it is the case in wireless remote control of the model or its flight programming. The operation of the flight control unit is easy and accurate.

The innovated package of the drone, additionally completed with an online video transmission, provides for operational, accurate in terms of positioning and rapid laying out of agricultural drainage systems in the landscape (such as by staking them out or by accurate topographical surveying using geodetic GPS equipment) prior their excavation. In such a way the flight control unit as per the invention is a completion to the ZC 304229 patent, which does not need to have an orthorectified aerial image available. Similarly, the whole package can be used for object monitoring, compilation of photographic documents or making video records of various activities observed from the height of several metres (usually 5 to 30 m), or from locations which are difficult to reach (land plots, buildings and other type of civil engineering objects).

The flight control unit as per the invention can be used in agriculture, water management and living environment applications, but finds its way also in civil engineering and also in any other types of operational ground reconnaissance (botanical or geological survey, archaeological field survey, tracing or safety mapping, etc.), when there are no orthorectified aerial photographs to record the actual or monitored process.

### List of Images in Drawings

The attached drawings show, as follows:
Fig. 1 shows the main structural components of a tied down drone equipped with the function of a pilot 4 who operates the guiding point 3 using mechanical type of control via guiding link 2, and their common arrangement.
Fig. 2 shows a function diagram of a flight control unit 6, with three flight control signals marked out.
Fig. 3 shows the delimitation of an air space, to apply to a drone tied above the pilot.

The following example of the execution of drone flight control unit as per the invention is only one of possible implementation options, not restricting the invention in any way.

### Examples of Implementation

### Example 1

Basis for the manufacture of a test model has become a drone kit made by DJI (http://www.dji.com), frame type F550 (hexacopter) with the Naza-M Lite controller. Videosignal transmission has taken place using the GoPro Hero3 cameras (with the Tarrot T-2D gimbal, but testing has also been conducted without the gimbal, with the camera objective lens facing downwards to the ground), completed with FPV A/V wireless transmitting/receiving system and a portable colour 7" monitor powered from a Li-Pol battery.

The guiding connection consisted from a fishing line of 0.28 mm dia. The first tested controller version served to verify the functionality of the devised flight control principle along a system of orthogonal x, y and z coordinates. The altitude control sensor consisted from a linear potentiometer with counter-traction produced by the effect of a rubber thimble (slingshot rubber). The function of a pair of sensors to control the flight direction has been implemented by two linear potentiometers swivelled each to the other at an angle of 90°. The directional α and β angles of the guiding connection, measured in reference to the pilot, were transposed through a mechanical gear onto the potentiometers. The respective position from the three potentiometers has been transformed in the electronic module onto control signals simulating the manual control of the RC wireless receiver, with the effect of maintaining the model within the required space in reference to the pilot.

Fig. 1 shows the main structural parts of a tied drone, equipped with the pilot's function 4, who operates the guiding point 3 and provides for its mechanical control via the guiding link 2, and the common arrangement of the parts mentioned. The mechanical components of the drone model 1 consist of the following: rotors driven by electric motors 10 with propellers, power supply unit 9 e.g. a rechargeable battery (generally mounted onto the body of model 1, but it may be left out in case the unit is powered via a cable serving as the guiding link 2), drone control unit 5, completed with the flight control unit 6. The interconnection between the electrical components is done using conductors. The pilot 4 controls the flight direction and altitude via the guiding link 2, which may consist e.g. of a wire reeled up onto a reel 3.

Fig. 2 shows the functional diagram of the flight control unit 6, with marked out three flight control signals. The flight altitude control signal is picked up by the altitude control sensor 7, depending on tension acting on the wire of guiding link 2. Using the mutually oriented pair of sensors 8 to control the flight direction across the horizontal plane is divided into orthogonal quadrants. A pair of signals obtained from the sensors depends on a vector the angle of which is determined mostly by the guiding link 2 and the horizontal plane of the drone, and the flight direction along the X and Y axes. The mutual position of the pilot and the drone is defined by the α and β angles, and from them the response of the flight control unit 6 is deduced, depending on the setup of flight internal parameters (response rate to changing angle, or definition of drone positional deviation γ, δ in respect of the pilot). Optionally, the flight control unit 6 may be equipped with electronic magnetometer 12, which generates a fourth signal to provide for automatic directional control of the drone. This function may be replaced with programming the drone control unit 5.

Fig. 3 shows the delimitation of an air space for a drone tied down above the head of a pilot, in which:
angles α, β on the left-hand side are < 90°; angles α, β on the righthand side are equal to 90°.
The α angle refers to the X axis, the β angle refers to the Y axis.
The relationship between the α, β and γ, δ angles, is as follows: γ=90°-α; δ=90°-β

The α and β angles represent angular deviations from the horizontal plane. As such they are mutually independent and their absolute value determines a quadrant in which the drone is moving around above the pilot. Here the parameters of the air space in dependence of the length of the guiding link 2 and the deviation 15 from the vertical, within the space of the pilot's 4 position, are described. Also the tolerance 14 allowed for maintaining the drone position and specified by parameters of the pair of flight direction sensors 8 and the setup of the flight control unit 6 is characterized.

The kit of drone, with video transmission for the purpose of laying out drainage systems in the landscape, has been tested by the staff of "Výzkumný ústav meliorací a ochrany půdy, v.v.i." (*Research Institute for Land Reclamation and Soil Protection*) in Prague, CZ, since the summer of 2013. The flight control unit as per the invention and arranged in line with the example 1, has been the subject of field testing in the spring of 2014.

### Industrial Usability

The new flight control unit refers to a supplementary component of a routinely equipped kit of unmanned drone models. However, the flight control unit is radically changing the operating terms and conditions by meeting the requirements prescribed by legislation, and those imposed on the safety of operation and piloting demands. The flight control unit can be manufactured industrially and be additionally installed in older or built-in into new types of drones.

### List of correlation symbols and explanations

- 1 -: model
- 2 -: guiding link
- 3 -: guiding point
- 4 -: pilot
- 5 -: drone control unit
- 6 -: flight control unit
- 7 -: altitude control sensor
- 8 -: pair of sensors to control the flight direction
- 9 -: power supply unit
- 10 -: electric motors with propellers
- 11 -: data conductors
- 12 -: electronic magnetometer
- 13 -: vertical line
- 14 -: tolerance allowed for maintaining a position
- 15 -: γ, δ - angle deviations from vertical line
- 16 -: α, β - angle deviations from horizontal line

- L_{MAX}: - highest length of guiding link (2)
- GPS: - Global Position System
- RC: - Radio Control
- waypoint: - breaking point of the flight path, specified by GPS coordinates
- FPV A/V: - First Person View. A technology of picture transmission from unmanned flying vehicles.
- LiPol: - Lithium-polymer accumulator
- DJI, F550, Naza-M Lite, GoPro Hero3, Tarrot T-2D: - commercial and brand names
- UAV: - Unmanned Aerial Vehicle
- X, Y, Z: - axes of an orthogonal system of coordinates

## Claims

1. Flight control unit (6) of a tied-up model of drone, consisting primarily from sensors to control the flight altitude and direction, guiding link (2) and electronic part connectable to the drone control unit (5), **characterized in that** the guiding link (2) of the guiding point (3), linked to the model (1) is terminated with the altitude control sensor (7) and a pair of flight direction control sensors (8), with the flight control unit (6) connectable with the drone control unit (5).

2. Flight control unit (6) as per the claim 1 in a structural arrangement, **characterized in that** the flight control unit (6) and the drone control unit (5) are merged in one single structural assembly.

3. Flight control unit (6) as per the claim 1 or 2, **characterized in that** the power supply unit (9) is split up into two parts, i.e. the auxiliary power supply unit being a part of the guiding point (3), and the main power supply unit mounted on the model (1), in which the recharging of the main power supply unit on model (1) takes place via the guiding link (2).

4. Flight control unit (6) as per the claim 1 or 2, **characterized in that** the structural arrangement of the power supply unit (9) as a part of the guiding point (3) provides simultaneously power to the model (1) via the guiding link (2).

5. Flight control unit (6) as per the claims 1, 2, 3 or 4, **characterized in that** it includes electronic magnetometer (12).
